(19) Europäisches Patentamt
European Patent Office
Office européen des brevets

(11) **EP 3 156 211 B1**

(12) **EUROPÄISCHE PATENTSCHRIFT**

(45) Veröffentlichungstag und Bekanntmachung des Hinweises auf die Patenterteilung:
**26.09.2018   Patentblatt 2018/39**

(21) Anmeldenummer: **15190208.7**

(22) Anmeldetag: **16.10.2015**

(51) Int Cl.:
*B29C 65/00* (2006.01)    *B29C 65/06* (2006.01)
*B29C 65/08* (2006.01)    *B29C 65/10* (2006.01)
*B29C 65/14* (2006.01)    *B29C 65/16* (2006.01)
*B29C 65/18* (2006.01)    *B29C 65/20* (2006.01)
*B29C 65/38* (2006.01)    *B29C 65/50* (2006.01)
*B29C 65/72* (2006.01)    *B29C 65/02* (2006.01)
*B29C 65/04* (2006.01)    *C08J 5/12* (2006.01)
*C08J 7/00* (2006.01)    *C09D 133/12* (2006.01)
*C08L 33/08* (2006.01)    *C08L 33/12* (2006.01)
*C08L 77/00* (2006.01)    *B29K 77/00* (2006.01)
*B29K 33/00* (2006.01)

(54) **VERFAHREN ZUM SCHWEISSEN DER KUNSTSTOFFE POLYAMID UND POLY (METH) ACRYLAT**

METHOD OF WELDING THE PLASTICS POLYAMIDE AND POLY (METH) ACRYLATE

PROCEDE DE SOUDAGE DES PLASTIQUES POLYAMIDE ET  POLY (METH) ACRYLATE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**19.04.2017   Patentblatt 2017/16**

(73) Patentinhaber: **Henkel AG & Co. KGaA 40589 Düsseldorf (DE)**

(72) Erfinder:
• **WALTER, Pablo**
  **80801 München (DE)**
• **FRIEDRICH, Norman**
  **80636 München (DE)**
• **GONZALEZ, Lina**
  **82008 München (DE)**
• **LÜTZEN, Hendrik**
  **80637 München (DE)**
• **HÄRTIG, Thomas**
  **80796 München (DE)**

(56) Entgegenhaltungen:
**DE-A1-102005 056 286     GB-A- 2 419 844**

• **CHRISTIAN HOPMANN ET AL: "Artungleiches Verbinden", KUNSTSTOFFE, CARL HANSER VERLAG, MUNCHEN, DE, Bd. 103, Nr. 3, Januar 2013 (2013-01), Seiten 40-45, XP001526508, ISSN: 0023-5563**

**Beschreibung**

Die vorliegende Erfindung bezieht sich auf ein Verfahren zum Verschweißen von einem Polyamid-Kunststoff mit einem Poly(meth)acrylat Kunststoff unter Verwendung eines Primers, wobei der Primer mindestens ein Copolymer synthetisiert aus mindestens einem Styrol oder Styrol-Derivat und mindestens einem Maleinsäureanhydrid oder Maleinsäureanhydrid-Derivat enthält. Darüber hinaus betrifft die vorliegende Erfindung entsprechend verschweißte Produkte.

Aus dem Stand der Technik sind verschiedene Verfahren bekannt, um zwei oder mehrere Substrate, die aus Kunststoffen, wie zum Beispiel aus Polyolefinen, Polyacrylaten oder Polyamid bestehen, miteinander zu verbinden. Dabei gibt es sowohl mechanische Verbindungsmöglichkeiten, wie beispielsweise das Rasten oder Schrauben, oder Klebeverfahren. Alternativ dazu können Kunststoffe auch miteinander verschweißt werden. Beim Schweißen handelt sich um ein Fügeverfahren für eine nicht lösbare, stofflich physikalische Verbindung im Allgemeinen artgleicher Kunststoffe, wie z.B. PE mit PE oder PA mit PA. Artgleiche thermoplastische Kunststoffe sind solche Polymere, die sich hinsichtlich ihrer Molekularstruktur, ihrer Schmelztemperatur, der Schmelzviskosität und ihres Wärmeausdehnungskoeffizienten nicht wesentlich unterscheiden und grundsätzlich bedingt miteinander mischbar sind. Meistens handelt sich es bei artgleichen Kunststoffen um Kunststoffe einer identischen Polymer-Basis bzw. um identische Kunststoff.

Es sind verschiedenste Verfahren bekannt, um zwei oder mehrere artgleiche Kunststoffe miteinander zu verschweißen. Dabei können unterschiedlichste Schweißverfahren eingesetzt werden, wie beispielsweise Infrarot-Schweißen, Infrarot/Vibrationsschweißen oder Ultraschallschweißen. Diese Verfahren zum Verschweißen von gleichartigen Kunststoffen basieren darauf, dass die jeweiligen Kunststoffe im Bereich der Schweißzone aufgeschmolzen werden und dass sich die Stoffe in dieser Zone stoff- und kraftschlüssig miteinander verbinden.

Diese Schweißverfahren funktionieren immer so lange gut, solange artgleiche Kunststoffe miteinander verbunden werden sollen. Sobald allerdings zwei Kunststoffe miteinander verschweißt werden sollen, die artungleich bzw. unverträglich miteinander sind, wie zum Beispiel Kunststoffe aus Polyamid und Poly(meth)acrylat, kann keine dauerhafte Verbindung mit hoher mechanischer Festigkeit zwischen den beiden Substraten hergestellt werden. In dem Fall des Versuches eines direkten Verschweißens mit dem aus dem Stand der Technik bekannten Schweißverfahren der beiden Kunststoffe Polyamid und Poly(meth)acrylat oder genauer Polymethylmethacrylat werden keine bis sehr geringe Festigkeiten erzielt.

Bisher konnten entsprechende unterschiedliche Kunststoffe lediglich durch eine mechanische Verbindung oder ein Klebeverfahren miteinander verbunden werden. Der Nachteil an einer mechanischen Verbindung ist die komplizierte Anbringung, die punktuelle Materialbelastung als auch die Notwendigkeit eines zusätzlichen mechanischen Verbindungsmittels. Des Weiteren können bei einer mechanischen Verbindung selten stoffschlüssige Verbindungen erreicht werden. Der Nachteil an einem Klebeverfahren ist jedoch, dass die Endfestigkeit der Verbindung erst nach einem langen Zeitraum, der bis zu mehreren Wochen betragen kann, erreicht wird. Des Weiteren erfordert das Verkleben von niederenergetischen Oberflächen meist eine aufwendige Vorbehandlung der Fügepartner. Zusätzlich ist eine Klebeverbindung häufig aufgrund der äußeren Witterung nicht unbegrenzt stabil. Außerdem ist die Bereitstellung einer sauberen Klebeverbindung häufig kompliziert und zeitaufwendig. Somit stellt die Verbindung mittels eines Schweißverfahrens für Kunststoffe die sauberste, schnellste und einfachste Lösung dar. Bekannt ist ein Verfahren zur Verschweißung von zwei nicht kompatiblen Formteilen A und B mittels einer Folie, deren Material der ersten Oberfläche mit Formteil A kompatibel ist und deren Material der zweiten Oberfläche mit Formteil B verträglich ist (DE 10 2005 056 286).

Die Aufgabe der vorliegenden Erfindung bestand somit darin, ein einfaches Verfahren zum Verschweißen von einem Polyamid-Kunststoff und einem Poly(meth)acrylat-, insbesondere Polymethylmethacrylat-Kunststoff zu finden. Dabei sollte die Verbindung zwischen diesen unterschiedlichen Kunststoffen durch die Schweißnaht möglichst stabil und von Dauer sein.

Überraschenderweise wurde gefunden dass diese Aufgabe durch ein Verfahren zum Verschweißen von einem Polyamid-Kunststoff mit einem Poly(meth)acrylat-, insbesondere Polymethylmethacrylat-Kunststoff unter Verwendung eines Primers gelöst wird, wobei der Primer mindestens ein Copolymer synthetisiert aus mindestens einem Styrol oder Styrol-Derivat und mindestens einem Maleinsäureanhydrid oder Maleinsäureanhydrid-Derivat enthält.

Durch die Verwendung eines Primers enthaltend mindestens ein entsprechendes Copolymer konnten beim Verschweißen von einem Polyamid-Kunststoff mit einem Polymethylmethacrylat-Kunststoff besonders stabile und alterungsbeständige Verbindungen zwischen den Kunststoffen erhalten werden.

Der erste Fügepartner zum Verschweißen unter Verwendung eines Primers ist ein Polyamid-Kunststoff. Bei dem Polyamid-Kunststoff handelt es sich vorzugsweise um ein thermoplastisches Polyamid. Zu den Thermoplasten auf Amid-Basis gehören beispielsweise Polyamid 6, ein Homopolymerisat aus epsilon-Caprolactam (Polycaprolactam); Polyamid 11, ein Polykondensat aus 11-Aminoundecansäure (Poly-11-aminoundecanamid); Polyamid 12, ein Homopolymerisat aus omega-Laurinlactam (Polylaurinlactam); Polyamid 6.6, ein Homopolykondensat aus Hexamethylendiamin und Adipinsäure (Polyhexamethylenadipamid); Polyamid 6.10, ein Homopolykondensat aus Hexamethylendiamin und Sebacinsäure (Polyhexamthylensebacamid); Polyamid 6.12 ein Homopolykondensat aus Hexamethylendiamin und Dodecandisäure (Polyhexamethylendodecanamid) oder Polyamid 6-3-T, ein Homopolykondensat aus Trimethylhexamethylendiamin und Terephthalsäure (Polytrimethylhexamthylenterephthalamid), Poly(p-phenylenterephthalamid) oder Poly(m-phenylenterephthalamid) aus Phenylendiamin und Terephthalsäure, Polyphthalamide PPA aus verschiedenen Diaminen und Terephthalsäure sowie Gemische davon.

Optisch transparente Polyamide umfassen mikrokristalline Polyamide enthaltend lineare aliphatische Dicarbonsäuren und cycloaliphatische Diamine, amorphe Polyamide enthaltend lineare aliphatische Dicarbonsäuren und cycloaliphatische Diamine und optional Lactame bzw. Aminocarbonsäuren, amorphe Polyamide enthaltend Terephthalsäure und cycloaliphatische oder verzweigte aliphatische Diamine und optional Lactame bzw. Aminocarbonsäuren oder amorphe Polyamide enthaltend Isophthalsäure und cycloaliphatische oder lineare oder verzweigte aliphatische Diamine und optional Lactame bzw. Aminocarbonsäuren. Geeignete optisch transparente Polyamide sind beispielsweise Amide aus Dodecandisäure und einem Isomerengemisch des 4,4'-Bis(aminocyclohexyl)-methans, aus Terephthalsäure und dem Isomerengemisch des 2,2,4- und 2,4,4-Trimethylhexamethylendiamins, aus Dodecandisäure und dem Isomerengemisch des 3,3'-Dimethyl-4,4'-bis(aminocyclohexyl)-methans, aus Laurinlactam, Isophthalsäure und dem Isomerengemisch des 3,3'-Dimethyl- 4,4'-bis(aminocyclohexyl)-methans oder aus Tetradecandisäure und dem Isomerengemisch des 3,3'-Dimethyl- 4,4'-bis(aminocyclohexyl)-methans oder aus epsilon-Caprolactam oder omega-Laurinlactam.

Bevorzugte Polyamide werden ausgewählt aus der Gruppe bestehend aus Polyamid 6, Polyamid 6.6, Polyamid 6.10, Polyamid 6.12, Polyamid 10.10, Polyamid 11, Polyamid 12, Polyamid 10.12, Polyphthalamiden, optischen transparenten Polyamiden oder Mischungen auf Basis dieser Polyamide. Besonders bevorzugte Polyamide sind ausgewählt aus Polyamid 6, Polyamid 6.6, Polyamid 12, Polyphthalamiden, optisch transparenten Polyamiden sowie deren Mischungen, insbesondere Polyamid 12, Polyamid 6, Polyamid 6.6 sowie deren Mischungen. Die Polyamid-Kunststoffe können auch weitere Komponenten enthalten, z.B. Füllstoffe, wie Glasfasern, Pigmente, mineralische Partikel, Farbstoffe, Rheologiehilfsmittel, Entformungshilfen oder Stabilisatoren. Vorzugsweise besteht der Polyamid-Kunststoff zu mehr als 40 Gew.-%, insbesondere zu mehr als 60 Gew.-%, vorzugsweise zu mehr als 70 Gew.-%, bevorzugt zu mehr als 90 Gew.-% aus den genannten Polyamiden, jeweils bezogen auf den gesamten Polyamid-Kunststoff (mit Füllstoffen). Vorzugsweise besteht der Polyamid-Kunststoff zu mehr als 90 Gew.-%, insbesondere zu mehr als 95 Gew.-%, bevorzugt zu mehr als 98 Gew.-% aus den genannten Polyamiden, jeweils bezogen auf den Polymeranteil des Polyamid-Kunststoffes (Gesamt Polyamid-Kunststoff ohne Füllstoffe). Bevorzugt weisen die Polyamid-Kunststoffe einen Gehalt an den genannten Polyamiden von 50-90 Gew.-%, insbesondere 60-80 Gew.-% auf, jeweils bezogen auf den gesamten Polyamid-Kunststoff (mit Füllstoffen).

Poly(meth)acrylat ist ein synthetischer, bevorzugt transparenter, thermoplastischer Kunststoff. Bevorzugte Poly(meth)acrylate sind aus 50 bis 100 Gew.-%, insbesondere 70 bis 100 Gew.-% Acrylat und/oder Methacrylat aufgebaut, wobei die (Meth)acrylat-Einheiten vorzugsweise mit einem C1 bis C12 Alkylrest, insbesondere C1-C4, bevorzugt Methylrest verestert sind. Die Schreibweise Poly(meth)acrylat gibt an, dass das Polymer aus Acrylat und/oder Methacrylat aufgebaut ist. Bzw. die Schreibweise (Meth)acrylat gibt an, dass es sich sowohl um ein Acrylat als auch um ein Methacrylat handeln kann. Insbesondere bevorzugt ist das Poly(meth)acrylat ein Polymethylmethacrylat (PMMA, umgangssprachlich auch Acrylglas oder Plexiglas). Bevorzugte Polymethylmethacrylate sind aus 50 bis 100 Gew.-%, insbesondere 70 bis 100 Gew.-% Methylmethacrylat aufgebaut.

Als Comonomere für den Aufbau des Poly(meth)acrylats, insbesondere des Polymethylmethacrylats kommen in erster Linie (Meth)acrylsäure, insbesondere Acrylsäure, und deren Alkylester mit 1 bis 12 Kohlenstoffatomen, insbesondere 1 bis 4 Kohlenstoffatomen im Alkylrest, sowie Acryl- und/oder Methacrylnitril, Acryl- und/oder Methacrylamid, Styrol und/oder Maleinsäureanhydrid in Betracht. Bevorzugt sind thermoplastisch und thermoelastisch verformbare Kunststoffe. Bevorzugte thermoplastische Polymethylmethacrylat-Kunststoffe haben gewichtsmittlere Molmassen (Gewichtsmittel Mw) von größer 50000 g/mol, insbesondere größer 100000 g/mol. Vorzugsweise weisen die thermoplastische Poly(meth)acrylat-, insbesondere Polymethylmethacrylat-Kunststoffe eine gewichtsmittlere Molmassen (Gewichtsmittel Mw) von kleiner 2000000 g/mol, insbesondere kleiner 1000000 g/mol, bevorzugt kleiner 500000 g/mol auf. Besonders bevorzugte thermoplastische Poly(meth)acrylat-, insbesondere Polymethylmethacrylat-Kunststoffe haben gewichtsmittlere Molmassen (Gewichtsmittel Mw) von 50000 g/mol bis 250000 g/mol, z. B. ca. 100000 g/mol bis ca. 180000 g/mol für den Spritzguss.

Die Poly(meth)acrylat-, insbesondere die Polymethylmethacrylat-Kunststoffe können auch weitere Komponenten enthalten, z.B. Füllstoffe, wie Glasfasern, Pigmente, Farbstoffe, Rheologiehilfsmittel, Entformungshilfen oder Stabilisatoren. Bevorzugt besteht der Poly(meth)acrylat-, insbesondere der Polymethylmethacrylat-Kunststoff zu mehr als 90 Gew.-%, insbesondere zu mehr als 95 Gew.-%, bevorzugt zu mehr als 98 Gew.-% aus den genannten Poly(meth)acrylaten, insbesondere den genannten Polymethylmethacrylaten, jeweils bezogen auf den Polymeranteil des Poly(meth)acrylat-Kunststoffes (Gesamt Poly(meth)acrylat-Kunststoff ohne Füllstoffe). Vorzugsweise besteht der Polymethylmethacrylat-Kunststoff zu mehr als 90 Gew.-%, insbesondere zu mehr als 95 Gew.-%, bevorzugt zu mehr als 98 Gew.-% aus dem genannten Poly(meth)acrylat-, insbesondere dem Polymethylmethacrylat, jeweils bezogen auf den gesamten Polymethylmethacrylat-Kunststoff (mit Füllstoffen).

Ein weiterer wesentlicher Bestandteil der Erfindung ist die Verwendung mindestens eines Primers, vorzugsweise genau eines Primers. Der Primer enthält mindestens ein Copolymer, welches als einpolymerisierte Monomere mindestens ein Styrol oder Styrol-Derivat und mindestens ein Maleinsäureanhydrid oder Maleinsäureanhydrid-Derivat enthält.

Der Primer stellt ein Schweißhilfsmittel dar, welches vorzugsweise als eine Vorbehandlungsschicht auf mindestens einem der zu verschweißenden Oberflächen der Substrate im Bereich der Fügezone aufgetragen wird. Der Primer ist nicht als Klebstoff, Reinigungsmittel oder ähnliches zu verstehen, vielmehr ist der Primer ein Hilfsmittel zum Schweißen, wodurch die Fügepartner in der Fügezone (bzw. Schweißzone) kompatibel zueinander gemacht werden und so in der Fügezone beim Fügen eine stoff- und kraftschlüssige Verbindung zwischen den zu verschweißenden Substraten entsteht.

Die Versuche haben gezeigt, dass durch die Verwendung eines entsprechenden Primers, enthaltend ein erfindungsgemäßes Copolymer, die Kunststoffe Polyamid und Poly(meth)acrylat beim Schweißen in der Fügenaht kompatibilisiert werden konnten und somit eine stabile und dauerhafte Verbindung erzielt werden kann. Ohne die Verwendung eines entsprechenden Primers konnten keine oder nur sehr geringe Festigkeiten der geschweißten Verbindung erzielt werden. Vorzugsweise weisen die gefügten Substrate eine Zugfestigkeit von mehr als 2 MPa, insbesondere mehr als 4 MPa auf. Zugfestigkeit wird mittels einer Zuggeschwindigkeit von 5 mm/s gemäß der in den Versuchen beschriebenen Versuchsdurchführung bestimmt.

Vorzugsweise wird das mindestens eine Copolymer im Primer zumindest aus den Monomeren Styrol und Maleinsäureanhydrid synthetisiert. Neben dem Styrol bzw. Styrol-Derivat, wie alpha-Methylstyrol, und dem Maleinsäureanhydrid bzw. Maleinsäureanhydrid-Derivat kann das Copolymer auch weitere Monomere einpolymerisiert enthalten. Vorzugsweise enthält das Copolymer Monomere ausgewählt aus der Gruppe von Acrylaten und Methacrylaten (zusammen (Meth)acrylate), insbesondere (Meth)acrylate mit einem Alkylrest mit 1 bis 12 Kohlenstoffatomen, vorzugsweise 1 bis 4 Kohlenstoffatomen, vorzugsweise Methyl(meth)acrylat. Des Weiteren können auch funktionale Monomere mit Funktionalitäten wie beispielsweise Epoxid- oder Isocyanatgruppen, Carboxyl- oder Amingruppen, aber auch Alkoxysilangruppen, eingesetzt werden.

In einer besonderen Ausführungsform besteht das Copolymer aus einpolymerisiertem Styrol und Maleinsäureanhydrid. In einer anderen besonderen Ausführungsform besteht das Copolymer aus einpolymerisierten Styrol, Maleinsäureanhydrid und Methylmethacrylat. Bei diesen Varianten können die Monomere unterschiedlichen molaren Verhältnissen eingesetzt werden.

In einer bevorzugten Ausführungsform des erfindungsgemäßen Copolymer ist das molare Verhältnis von Styrol zu Maleinsäureanhydrid 1:0,01 bis 1:2, bevorzugt 1:0,05 bis 1:1, besonders bevorzugt 1:0,1 bis 1:0,3. In einerweiteren bevorzugten Ausführungsform des erfindungsgemäßen Copolymers mit einpolymerisiertem Acrylat und/oder Methacrylaten, insbesondere Methylacrylat und/oder Methylmethacrylat, ist das molare Verhältnis von Styrol zu (Meth)acrylat zu Maleinsäureanhydrid 1:5:2 bis 1:0,2:0,01, insbesondere 1:2:1 bis 1:0,5:0,05 bevorzugt 1:1,5:0,5 bis 1:0,8:0,1, besonders bevorzugt 1:1:0,2.

Die Copolymere können in bekannter Weise aus den Monomeren synthetisiert werden. Zusätzlich können die Copolymere in einer Polymer-analogen Reaktion gepfropft sein. Besonders bevorzugte Reaktionspartner zum Pfropfen sind Alkohole, Thiole, Amine, Isocyanate, Anhydride, Carbonsäuren, insbesondere Alkohole, bevorzugt Alkohole mit 1 bis 6 Kohlenstoffatomen, wie Methanol und Isobutanol. Zum Pfropfen können die Maleinsäureanhydrid-Monomere bzw. Maleinsäureanhydrid-Einheiten im Polymer mit dem Reaktionspartner reagieren, insbesondere durch Alkohole verestert werden. Vorzugsweise reagieren bzw. verestern die Maleinsäureanhydrid-Gruppen nur partiell, insbesondere weniger als 70 % der Maleinsäureanhydrid-Gruppen. Besonders bevorzugt ist es, wenn die Maleinsäureanhydrid-Gruppen nicht umgesetzt sind und weiterhin als Anhydrid Gruppen vorliegen. In der bevorzugten Ausführung können die Maleinsäureanhydrid-Gruppen auch teilweise hydrolysiert vorliegen. Eine komplette Umsetzung der Maleinsäureanhydrid-Gruppen kann zu einer Verminderung der Festigkeit der resultierenden Schweißverbindung führen.

Besonders vorteilhaft sind Copolymere, die einen Maleinsäureanhydrid-Gehalt von größer gleich 0,1 Gew.-%, insbesondere größer gleich 0,5 Gew.-%, bevorzugt größer gleich 4 Gew.-%, besonders bevorzugt größer gleich 8 Gew.-% bezogen auf das Copolymer enthalten. In vorteilhafter Weise enthalten die Copolymere einen Maleinsäureanhydrid-Gehalt von 0,1 - 50 Gew.-%, insbesondere 0,5 - 40 Gew.-%, bevorzugt 4 - 30 Gew.-%, besonders bevorzugt 8 - 26 Gew.-% bezogen auf das Copolymer. Copolymere mit einem entsprechenden Maleinsäureanhydrid-Gehalt weisen besonders gute Festigkeiten der geschweißten Verbindung auf.

Des Weiteren sind Copolymere bevorzugt, die eine Glasübergangstemperatur Tg (mittels DSC mit einer Heizrate von 10 K/min unter Stickstoff, insbesondere in Anlehnung an DIN EN ISO 11357-1:2010-3 und DIN EN ISO 11357-2:2014-07 bestimmt) von größer 30 °C, insbesondere größer 80 °C, besonders bevorzugt größer 100 °C aufweisen. Copolymere mit einer entsprechenden Glasübergangstemperatur verbessern insbesondere die mechanischen Eigenschaften der Schweißverbindung bei erhöhten Temperaturen.

Vorteilhafterweise haben die Copolymere ein gewichtsmittleres Molekulargewicht Mw von größer gleich 5000 g/mol, insbesondere größer gleich 50000 g/mol, bevorzugt größer gleich 100000 g/mol. Bevorzugt haben die Copolymere ein gewichtsmittleres Molekulargewicht Mw im Bereich von 5000 - 2000000 g/mol, insbesondere von 50000 - 1000000 g/mol, bevorzugt von 100000 - 500000 g/mol. Copolymere mit einem entsprechenden gewichtsmittleren Molekulargewicht wirken sich positiv auf die Sprödität und Festigkeit der erhaltenen Verbindung aus. Das gewichtsmittlere Molekulargewicht kann mittels GPC gegen einen Polystyrol-Standard bestimmt werden.

Neben dem Copolymer kann der Primer vorzugsweise mindestens ein weiteres Polymer enthalten. Das mindestens eine weitere Polymer bzw. Copolymer ist vorzugsweise zu mindestens einem der beiden zu verschweißenden Kunststoffen und zum Primer Copolymer kompatibel. Besonders bevorzugt enthält der Primer mindestens ein Polyamid-Polymer und/oder ein Poly(meth)acrylat-, insbesondere Polymethylmethacrylat-Polymer, vorzugsweise jeweils die oben spezifizierten. Ganz bevorzugt enthält der Primer mindestens ein Polymethylmethacrylat-Polymer. Die Verwendung eines zusätzlichen Polymers neben dem erfindungsgemäßen Copolymer im Primer hat zu einer weiteren Verbesserung der Festigkeit geführt.

Als kompatibles weiteres Polymer wird vorzugsweise ein Polymer eingesetzt, welches zu einem, insbesondere zu beiden zu fügenden Kunststoffen und insbesondere auch zu dem oben genannten ersten erfindungsgemäßen Polymer eine gewichtete quadratische Distanz der Hansen-Parameter $(R_a)^2$ von kleiner 22 MPa, insbesondere von kleiner 17 MPa, bevorzugt von kleiner 15 MPa, besonders bevorzugt von kleiner 12 MPa aufweist.

Die gewichtete quadratische Distanz der Hansen-Parameter $(R_a)^2$ bestimmt sich gemäß der folgenden Formel:

$$(R_a)^2 = 4(\Delta\delta_D)^2 + (\Delta\delta_P)^2 + (\Delta\delta_H)^2$$

In dieser Formel ist $\delta_D$ der Hansen-Parameter für die Dispersionskräfte, $\delta_P$ der Hansen-Parameter für die Polarität und $\delta_H$ der Hansen-Parameter für die Wasserstoffbrückenbindungen. $\Delta\delta_D$, $\Delta\delta_P$ und $\Delta\delta_H$ stellen jeweils die Differenzen dieser Hansen-Parameter der zu vergleichenden Kunststoffe bzw. Polymere dar, z.B. $\Delta\delta_D = (\delta_{D1} - \delta_{D2})$ der Polymere 1 und 2. Die Bestimmung der Werte der einzelnen Hansen-Parameter $\delta_D$, $\delta_P$ und $\delta_H$ für die jeweiligen Kun-stoffe bzw. Polymere erfolgt gemäß dem Buch "Hansen Solubility Parameters: A User's Handbook" von Charles M. Hansen (second edition; Taylor & Francis Group; 2007; ISBN-10 0-8493-7248-8). Dieser Quelle können bereits viele Werte einzelner Polymere entnommen werden. Gemäß der in diesem Buch beschriebenen Methode können die Hansen-Parameter vorzugsweise mit dem Programm HSPIP (4th Edition 4.1.07) aus der mitgelieferten Datenbank entnommen, oder, falls nicht vorhanden, mit der enthaltenen "DIY" - Funktionalität des Programms, vorzugsweise unter Verwendung des mitgelieferten neuronalen Netzes, wie in der Hilfe beschrieben, bestimmt werden. Das HSPIP Programm ist über die Fa. Steven Abbott TCNF Ltd erhältlich.

Vorzugsweise weist das mindestens eine Poly(meth)acrylat-, insbesondere Polymethylmethacrylat-Polymer im Primer gewichtsmittlere Molmassen (Gewichtsmittel Mw) von größer 50000, insbesondere größer 100000 g/mol auf. Vorzugsweise weisen die Poly(meth)acrylat-, insbesondere Polymethylmethacrylat-Polymere im Primer eine gewichtsmittlere Molmasse (Gewichtsmittel Mw) von kleiner 2000000 g/mol, insbesondere kleiner 1000000 g/mol, bevorzugt kleiner 500000 g/mol auf. Besonders bevorzugte Poly(meth)acrylat-, insbesondere Polymethylmethacrylat-Polymere im Primer haben gewichtsmittlere Molmassen (Gewichtsmittel Mw) von 50000 bis 250000 g/mol.

Der Gehalt des weiteren Polymeres, insbesondere des Polymethylmethacrylat-Polymers, am Primer ist bevorzugt 1 - 40 Gew.-%, insbesondere 5 - 30 Gew.-%, besonders bevorzugt 10 - 20 Gew.-%, jeweils bezogen auf das Gesamtgewicht des Primers. Der Gehalt des weiteren Polymeres, insbesondere des Polymethylmethacrylat-Polymers, am Polymergehalt des Primer ist bevorzugt 5 - 70 Gew.-%, insbesondere 20 - 60 Gew.-%, besonders bevorzugt 30 - 50 Gew.-%, jeweils bezogen auf den Gesamtpolymeranteil des Primers (Primer ohne Lösungsmittel und ohne Füllstoffe).

Neben dem Copolymer und dem weiteren Polymer kann der Primer auch ein Lösungsmittel, insbesondere ein organisches Lösungsmittel enthalten. Vorzugsweise enthält der Primer einen Lösungsmittelgehalt von 10 - 90 Gew.-%, insbesondere 50 - 85 Gew.-%, besonders bevorzugt 60 - 80 Gew.-%, jeweils bezogen auf das Gesamtgewicht des Primers.

Geeignete Lösungsmittel sind alle gängigen Lösungsmittel, wie zum Beispiel Wasser, Alkohole, Ketone, wie Mehylisobutylketon (MIBK) oder Cyclohexanon (CH), Ether, wie Diethylether oder Tetrahydrofuran (THF), Ester, wie Essigsäureethylester, oder Carbonate, wie Dimethyl- oder Dipropylcarbonat, oder Gemische daraus.

In einer bevorzugten Ausführungsform enthält der Primer organische Lösungsmittel. Besonders bevorzugte Lösungsmittel sind Lösungsmittel mit einem Dampfdruck bei 20 °C von 1 bis 600 hPa, insbesondere 2 bis 200 hPa, besonders bevorzugt 5 bis 20 hPa. Lösemittel mit einem entsprechenden Dampfdruck haben sich besonders vorteilhaft dabei herausgestellt, die Blasenbildung in der Primerschicht beim Abdampfen zu minimieren bzw. zu verhindern. Insbesondere bevorzugt enthält der Primer ein Lösungsmittel ausgewählt aus Tetrahydrofuran, Mehylisobutylketon, Cyclohexanon und Gemische daraus, besonders bevorzugt enthält der Primer Tetrahydrofuran oder eine Mischung aus Mehylisobutylketon und Cyclohexanon. Wenn eine Mischung aus Mehylisobutylketon und Cyclohexanon als Lösungsmittel eingesetzt wird, enthält diese Mischung vorzugsweise 10-50 Gew.-%, insbesondere 20-35 Gew.-% Cyclohexanon, jeweils bezogen auf die gesamte Mischung an Lösungsmittel.

Wenn organische Lösungsmittel eingesetzt werden, beträgt der Gesamtpolymergehalt des Primers vorzugsweise 10 - 90 Gew.-%, insbesondere 15 - 50 Gew.-%, besonders bevorzugt 20 - 40 Gew.-%, jeweils bezogen auf das Gesamtgewicht des Primers. Der Gesamtpolymergehalt entspricht dem Gehalt aller im Primer verwendeten Polymere, insbesondere der erfindungsgemäßen Copolymere und der oben beschriebenen weiteren Polymere.

In einer anderen bevorzugten Ausführungsform liegt der Primer in Form einer wässrigen Dispersion oder Emulsion vor. In diesem Fall ist das erfindungsgemäße Copolymer bzw., wenn vorhanden, die weiteren Polymere in Wasser emulgiert oder dispergiert. In diesem Fall beträgt der Gesamtpolymergehalt des Primers vorzugsweise 5 - 90 Gew.-%, insbesondere 10 - 70 Gew.-%, besonders bevorzugt 20 - 55 Gew.-%, jeweils bezogen auf das Gesamtgewicht des Primers. Für die wässrige Dispersion/Emulsion ist es vorteilhaft, dass die Polymerkomponente im Wesentlichen nur aus dem erfindungsgemäßen Copolymer und dem gegebenenfalls vorhandenen oben genannten weiteren Polymer, insbesondere nur aus dem erfindungsgemäßen Copolymer besteht. Unter dem Begriff "im Wesentlichen aus" wird erfindungsgemäß verstanden, wenn die Polymerkomponente zu mehr als 95 Gew.-%, vorzugsweise mehr als 97 Gew.-%, ganz besonders bevorzugt mehr als 99 Gew.-% aus der erfindungsgemäßen Copolymer und dem gegebenenfalls vorhandenen oben genannten weiteren Polymer, insbesondere nur aus dem erfindungsgemäßen Copolymer besteht.

Neben dem erfindungsgemäßen Copolymer, den oben genannten weiteren Polymeren und einem Lösungsmittel kann der Primer weitere Komponenten enthalten, wie zum Beispiel Füllstoffe, (Fluoreszenz)-Farbstoffe und Pigmente, rheologische Hilfsmittel Entschäumungshilfen, Benetzungshilfsmittel, Stabilisatoren oder Weichmacher. Abgesehen von Farbstoffen und Pigmenten ist der Primer jedoch vorzugsweise im Wesentlichen frei von weiteren Komponenten, insbesondere im Wesentlichen frei von jeglichen anderen Komponenten. Unter dem Begriff "im Wesentlichen frei von" wird erfindungsgemäß verstanden, wenn der Primer weniger als 5 Gew.-%, vorzugsweise weniger als 1 Gew.-%, ganz besonders bevorzugt weniger als 0,1 Gew.-% der jeweiligen Substanzen, insbesondere nicht die jeweiligen Substanzen enthalten.

Bei dem erfindungsgemäßen Verfahren zum Verschweißen von einem Polyamid-Kunststoff mit einem Poly(meth)acrylat-Kunststoff wird ein Primer verwendet, wobei der Primer mindestens ein Copolymer synthetisiert aus mindestens einem Styrol oder Styrol-Derivat und mindestens einem Maleinsäureanhydrid oder Maleinsäureanhydrid-Derivat enthält.

Der Primer dient bei diesem Verfahren als Hilfsmittel für die Verschweißung der beiden Kunststoffe Polyamid und Poly(meth)acrylat durch jeweiliges Aufschmelzen. Durch den verwendeten Primer enthaltend ein erfindungsgemäßes Copolymer kann eine Verträglichkeit zwischen den beiden Fügepartnern hergestellt werden, wodurch eine stabile und dauerhafte stoffschlüssige Verbindung zwischen den beiden Kunststoffen hergestellt werden kann.

Der Primer kann durch verschiedenste Verfahren auf die Oberfläche eines oder beider Fügepartner aufgetragen werden. So kann die Auftragung zum Beispiel durch eine Dosiervorrichtung, durch eine Nadel und Dosierroboter, durch Spritzgießen, durch Extrusion, durch Folienauftrag, durch Auftrag als Hotmelt, durch Aufsprühen, durch Aufstreichen oder durch Dippen erfolgen.

Bei dem Auftrag kann der Primer entweder nur auf eine Oberfläche oder auf beide Oberflächen der zu verschweißenden Substrate aufgetragen werden. Vorzugsweise wird der Primer nur auf eine Oberfläche, insbesondere die Polyamid-Oberfläche, aufgetragen. In dem Fall des Verschweißens mittels einer Folie wird die Folie zwischen die Substrate gelegt.

Für den Fall, dass der Primer Lösungsmittel enthält, wird der Primer nach dem Auftrag auf eine oder beide Oberflächen vorzugsweise so lange getrocknet bis das Lösungsmittel soweit verdampft ist, dass eine nicht klebrige, dimensionsstabile Primerschicht entstanden ist. Insbesondere ist der Primer bereits nach wenigen Sekunden und bis zu mehreren Wochen schweißbar. Vorzugsweise wird der Primer nach dem Auftrag für mindestens eine Stunde, bevorzugt für mindestens 12 Stunden getrocknet.

Vorzugsweise erfolgt der Auftrag auf eine oder beide Oberflächen der zu verschweißenden Substrate in der Weise, dass der Primer eine Schichtdicke von 1 $\mu$m bis 5000 $\mu$m, insbesondere 10-3000 $\mu$m, bevorzugt 50-1000 $\mu$m, besonders bevorzugt 100-500 $\mu$m hat. Falls ein Lösungsmittel im Primer enthalten war, bezieht sich die Schichtdicke auf den vom Lösemittel getrockneten Primer.

Nach dem Auftragen auf eine bzw. beide Oberflächen der zu verschweißenden Substrate und gegebenenfalls dem Trocknen des Primers können die zu verschweißenden Substrate mit einem gängigen Schweißverfahren miteinander verbunden werden. Das Schweißen von Kunststoffen erfolgt im Allgemeinen durch eine lokale Plastifizierung der Fügepartner in der Fügeebene und das Fügen unter Druck. Die Prozessparameter sind so zu wählen, dass ein ausgeprägtes Quetschfließen der Schmelze zu einer optimalen Verbindung der Fügepartner in der Fügeebene führt. Die Erwärmung kann über Konvektion, Kontakterwärmung, Strahlung oder Reibung erfolgen. Der unterschiedliche Energieeintrag zum Plastifizieren kann auf vielfältige Art und Weise erfolgen und hat zu verschiedenen Prozessen zum Schweißen von Kunststoffen geführt. Geeignete Schweißverfahren sind beispielsweise:

- Heißgasschweißen [HG](Hot gas welding)
  Konvektive Erwärmung mit einem heißen Gasstrom, im allgemeinen Luft, zweistufiger Prozess
- Heizelementschweißen [HE] (Hot plate welding)
  Kontakterwärmung, zweistufiger Prozess

- Ultraschallschweißen [US] (Ultrasonic welding)
  Erwärmung durch Reibung, eine transversale Welle im Ultraschallbereich führt zu einer Erwärmung in der Grenzschicht, einstufiger Prozess
- Hochfrequenzschweißen [HF] (High frequency welding)
  Erwärmung durch innere Reibung, polare Moleküle orientieren sich entsprechen eines hochfrequenten Magnetfelds, einstufig, nur für polare Kunststoffe und Folien eingesetzt
- Vibrationsschweißen [VIB] (Friction welding: Linear; Orbital; Spin; Angle)
  Erwärmung durch Reibung, einstufiger Prozess
- Laserschweißen [LW] (Laser welding: Kontur, Simultan, Quasisimultan, Maske)
  Erwärmung durch Strahlung, Strahlung kohärent, Lasertransmissionsschweißen, im Allgemeinen einstufig (zweistufig möglich)
- Infrarotschweißen [IR] (Infrared welding)
  Erwärmung über Strahlung, Strahlung inkohärent, zweistufig

Die oben angeführten Schweißverfahren können gegebenenfalls auch kombiniert werden wie zum Beispiel das Infrarotschweißen mit dem Vibrationsschweißen. Besonders bevorzugt erfolgt das Verschweißen des Polyamid-Kunststoffes mit dem Poly(meth)acrylat-Kunststoff durch ein Schweißverfahren ausgewählt aus Heizelementschweißen, Wärmekontakt- oder Wärmeimpulsschweißen, Warmgas- oder Heissgasschweißen, Mikrowellen- oder Induktionsschweißen. Laserstumpf- oder Laserdurchstrahlschweißen, Infrarotschweißen, Ultraschallschweißen, sowie Kombinationen daraus, insbesondere ausgewählt aus Infrarotschweißen, Ultraschallschweißen, sowie Kombinationen daraus.

Besonders bevorzugt ist ein Verfahren zum stoffschlüssigen Fügen der zwei Kunststoffe unter Verwendung des Primers, beinhaltend die folgenden Schritte.

- Bereitstellen des ersten Kunsstoffes aufweisend eine erste Fügezone,
- Bereitstellen des zweiten Kunststoffes aufweisend eine zweite Fügezone,
- Vorwärmen der ersten Fügezone,
- Auftragen des Primers auf die vorgewärmte erste Fügezone, insbesondere bei lösungsmittelfreien Primern,
- In-Kontakt-bringen der mit dem Primer versehenen ersten Fügezone mit der zweiten Fügezone,
- Stoffschlüssiges Verbinden der ersten Fügezone mit der zweiten Fügezone insbesondere durch den Einsatz üblicher Schweißverfahren von Kunststoffen wie beispielsweise dem Infrarotschweißen, Heizelementschweißen, Warmgasschweißen, Vibrationsschweißen, Ultraschallschweißen.

Für das Schweißen von Kunststoffen kann allgemein das Verständnis der DIN 1910-3:1977-09 angewendet werden. Mithin kann darunter ein stoffschlüssiges Verbinden von thermoplastischen Kunststoffen unter Zuhilfenahme von Wärme oder/und Druck verstanden werden. Die Erwärmung kann beispielsweise auf Basis von Kontakterwärmung (Schweißen durch festen Körper), Konvektionserwärmung (Schweißen durch Warmgas), Strahlungserwärmung (Schweißen durch Strahl) und Erwärmung durch Reibung (Schweißen durch Bewegung) sowie das Schweißen durch elektrischen Strom erfolgen.

In einer vorteilhaften Weiterbildung kommt ein Primer zum Einsatz, der derart ausgewählt und auf das Verfahren abgestimmt ist, dass das Auftragen auf eine erwärmte und/oder heiße Fügezone mit einer Temperatur, die kleiner ist als die Zersetzungstemperatur der Polymere im Primer, keinen Einfluss auf die innere chemische Vernetzung des Primers hat.

Vorteilhaft ist es, die erste Fügezone des ersten Kunststoffes vorzuwärmen. Für das Vorwärmen können dem Fachmann bekannte und sich für den Einsatzzweck eignende Hilfsmittel und Techniken zum Einsatz kommen. Insbesondere eignet sich der Einsatz von Warmgas oder Plasma zur Vorwärmung. Denkbar ist auch eine Vorwärmung mittels Bestrahlung, insbesondere Infrarotstrahlung oder Laserstrahlung. Auch kann ein Heizelement oder ein beheiztes Werkzeug zum Einsatz kommen, um die erste Fügezone vorzuwärmen. Schließlich ist auch ein Vorwärmen in einem Ofen oder einem beheizten Raum denkbar. Denkbar ist eine Vorwärmung des gesamten Kunststoffes und somit auch besagter Fügezone. Alternativ oder zusätzlich ist aber auch eine Vorwärmung lediglich der Fügezone selbst möglich.

In einer vorteilhaften Weiterbildung liegt der Abstand der Heizvorrichtung während der Vorwärmung zum Kunststoff, insbesondere zur vorzuwärmenden ersten Fügezone, insbesondere des wärmeabgebenden Bereichs der Heizvorrichtung oder des wärmeauslösenden Bereichs der Heizvorrichtung oder der zur vorzuwärmenden wirksamen Oberfläche der Heizvorrichtung oder die hinsichtlich der ersten Fügezone gegenüberliegenden Bereich der Heizvorrichtung in einem Bereich von 0,5 mm bis 100 mm, vorzugsweise im Bereich von 1 mm bis 60 mm. Denkbar ist alternativ auch, dass eine Erwärmung durch und/oder bei Kontaktierung insbesondere der ersten Fügezone durch das Heizelement der Heizvorrichtung erfolgt.

Ein weiterer Vorteil ist die Auswahl des Kunststoffes für den ersten Fügepartner und die Einstellung der Verfahrensparameter auf den ersten Kunststoff derart, dass die erste Fügezone beim Vorwärmen aufgeschmolzen wird und dass beim Vorwärmen eine Schmelzeschicht in der ersten Fügezone erzeugt wird. Die Dicke der Schmelzeschicht liegt in einer bevorzugten Ausführungsform vorzugsweise im Bereich von 0,05 mm bis 6 mm, besonders bevorzugt im Bereich von 0,1 mm bis 5 mm. Eine derartige Schmelzeschicht kann zu einer besseren Adhäsion und/oder Diffusion und/oder Wechselwirkung der Moleküle führen und in Verbindung mit einem gewissen Fluss zu einer besseren Verbindungsschicht. Befindet sich die Grenzschicht des ersten Kunststoffs im schmelzeflüssigen Zustand, kann es mit dem Primer zu Wechselwirkungen bis hin zu chemischen Bindungen kommen. Die Schmelzschicht kann insbesondere abhängig sein von der Bauteilgeometrie und der jeweiligen Bauteilauslegung. Vorzugsweise sind die Verfahrensparameter derart eingestellt und/oder gewählt, dass es zu keiner Verformung der Bauteile kommt. Bevorzugt ist ein Ausgleich von Temperaturunterschieden zwischen der Fügezone und dem aufzutragenden Primer durch geeignete Maßnahmen und/oder Verfahrensschritte vorgesehen. Dabei ist es insbesondere denkbar den Primer vorzuwärmen, um den Temperaturunterschied zwischen dem vorzugsweise thermoplastischen Primer und der ersten Fügezone zu reduzieren. Dies kann beispielsweise der schnellen Abkühlung der ersten Fügezone zwischen den Prozessschritten entgegenwirken.

Optional erfolgt vorzugsweise vor dem Schritt des Vorwärmens der ersten Fügezone eine Vorbehandlung der ersten Fügezone. Alternativ oder zusätzlich kann auch eine Vorbehandlung der zweiten Fügezone erfolgen. Als mögliche Vorbehandlung ist beispielsweise das Reinigen mittels eines Lösungsmittels oder eines beispielsweise alkalischen Kunststoffreinigers denkbar. Auch kann eine mechanische Vorbehandlung zum Einsatz kommen, insbesondere mittels Kratzen, Schmirgeln, Bürsten oder Strahlen. Denkbare chemische Vorbehandlungen sind insbesondere das Beizen oder der Einsatz reaktiver Gase. Darüber hinaus könnte sich der Einsatz einer thermischen, chemischen oder/und physikalischen Vorbehandlung als zweckmäßig erweisen, insbesondere mittels Gasflamme oder Plasmabogen. Alternativ oder zusätzlich kann eine elektrische Vorbehandlung mittels Corona-entladung, bei der die erste Fügezone und/oder die zweite Fügezone einer elektrischen Corona-entladung ausgesetzt wird damit an der entsprechenden Oberfläche polare Moleküle entstehen. Eine weitere Möglichkeit ist die Plasmabehandlung, vorzugsweise unter Einsatz einer Plasmadüse für die Vorbehandlung der Fügezone, insbesondere um eine Aktivierung und/oder Reinigung der entsprechenden Oberfläche zu erreichen. Gleichwohl kann sich auch eine Beschichtung mittels Plasma als zweckmäßig erweisen. Eine weitere Möglichkeit ist das Beflammen der Fügezone zur Erhöhung der Oberflächenspannung bei geeigneten Kunststoffen. Eine weitere Art der Vorbehandlung ist die Bestrahlung mittels UV-Strahlen, Elektronenstrahlen, radioaktiven Strahlen oder mittels Laser. Schließlich kann die Vorbehandlung in Form einer Beschichtung erfolgen, insbesondere durch einen Anstrich oder einen Haftvermittler. Denkbar ist auch eine Vorbehandlung des ersten Kunststoffes oder der Fügezonen des ersten Kunststoffes in einem größeren zeitlichen Abstand vor dem Vorwärmen. So ist beispielsweise denkbar, die Vorbehandlung schon im Rahmen des Fertigungsprozesses des ersten Kunststoffes vorzunehmen, um im erfindungsgemäßen Verfahren den vorbehandelten Kunststoff weiterverarbeiten zu können.

Der Auftrag des Primers ist auf unterschiedliche Art und Weise denkbar. Beispielsweise und insbesondere im industriellen Bereich ist der Auftrag mittels einer automatisierten Auftragshilfe, insbesondere mittels eines Dosierroboters denkbar. Selbiger kann dabei mit einem Nadel und/oder einem Höhensensor ausgerüstet sein, um komplexe Dosierungen durchführen zu können. Auch kann der Auftrag des Primers mittels Spritzgießen erfolgen, indem der Primer in einer Spritzgießmaschine plastifiziert und in die der erste Kunststoff mit der ersten Fügezone enthaltende Form unter Druck eingespritzt wird. Alternativ ist ein Folienauftrag denkbar, wobei in einem ersten Schritt mittels Folienblasen oder Flachfolienextrusion zunächst eine Folie aus dem Primer hergestellt wird. Anschließend kann die Folie beispielsweise mittels eines Schneid- oder Stanzverfahrens in eine beliebige Form zugeschnitten und in einem weiteren Schritt nach dem genannten Vorwärmen auf die erste Fügezone aufgebracht werden. Hierbei hat sich der Einsatz von Folien/Platten mit einer Stärke im Bereich von 1 $\mu$m - 5000 $\mu$m als zweckmäßig erwiesen. Weitere denkbare Auftragsmöglichkeiten sind das Extrusionsschweißen, bei dem der Primer in Form eines Schweißdrahtes vorliegt oder in einem Extruder aufgeschmolzen und in Schmelze auf die erste Fügezone appliziert werden kann. Auch ist die Bereitstellung des Primers in Form eines Schweißdrahtes möglich, um eine Applikation mittels Heißluftschweißen zu ermöglichen. Eine weitere Möglichkeit ist das Aufbringen des Primers mittels eines Sprühverfahrens. Auch beim Aufbringen beim Spritzguss ist eine Vorbehandlung oder/und Vorwärmung und/oder lokal unterschiedliche Temperierung des Spritzgießwerkzeug möglich. Selbstverständlich sind auch andere, dem Fachmann bekannte und sich für den spezifischen Anwendungsfall eignende Auftragsarten denkbar.

Ein weiterer Vorteil ist die weitere Erwärmung oder Erwärmung der ersten Fügezone während des Auftrags des Primers, insbesondere um einen Temperaturabfall der ersten Fügezone zwischen dem Vorwärmen und dem Auftragen des Primers zu vermeiden. Dies kann durch den oben beschriebenen Verfahrensschritt zum Vorwärmen erfolgen, welcher der Einfachheit halber während des Auftrags fortgeführt werden kann. Alternativ oder zusätzlich ist eine zusätzliche Erwärmung insbesondere mittels eines weiteren Verfahrensschrittes möglich. So kann sich beispielsweise als zweckmäßig erweisen, ein simultanes Erwärmen der ersten Fügezone durchzuführen, beispielsweise mittels simultanen Bestrahlens der ersten Fügezone mit Strahlung, erzwungene Konvektion, Kontakterwärmung während des Auftrages, um einen Temperaturabfall der ersten Fügezone nach dem Vorwärmen zu vermeiden.

In einer vorteilhaften Weiterbildung wird der Primer derart aufgebracht, das eine Verbindungsschicht mit einer Dicke im Bereich von 1 $\mu$m bis 5 mm, vorzugsweise im Bereich von 10 $\mu$m bis 3 mm auf der erste Fügezone angeordnet ist. Unter der Dicke der Verbindungsschicht ist dabei die Materialdicke der Verbindungsschicht auf der ersten Fügezone zu verstehen.

Ein weiterer Vorteil ist das Auftragen des Primers mittels einer Dosiervorrichtung auf die erste Fügezone unter Relativbewegung zwischen erster Fügezone und der Dosiervorrichtung, wobei mittels einer Heizvorrichtung die erste Fügezone, auf welche der Primer aufgetragen wird, unter Relativbewegung zwischen erster Fügezone und Heizvorrichtung, vor dem Auftrag des Primers vorgewärmt wird, wobei der Auftrag des Primers über die Dosiervorrichtung im vorgewärmten Zustand der ersten Fügezone erfolgt.

Hierbei hat es sich als besonders vorteilhaft erwiesen, dass die Heizvorrichtung bei der Vorwärmung an der ersten Fügezone mit einer Geschwindigkeit im Bereich von 10 mm/min bis 100 m/min, vorzugsweise im Bereich von 10 mm/min bis 30 m/min vorbeigeführt wird.

Ferner kann es von Vorteil sein, dass die Heizvorrichtung der Dosiervorrichtung vorzugsweise in einem definierten und konstanten Abstand voreilt. Insbesondere ist eine derartige Durchführung des Verfahrens von Vorteil, bei der der Primer mittels einer Dosiervorrichtung auf die erste Fügezone unter Relativbewegung von Dosiervorrichtung und erster Fügezone im Bereich von 10 mm/min bis 100 m/min, vorzugsweise im Bereich von 10 mm/min bis 30 m/min aufgetragen wird, wobei mittels einer Heizvorrichtung besagte Fügezone, auf welche der Primer aufgetragen wird, unter Relativbewegung von Heizvorrichtung und erster Fügezone vor dem Auftrag des Primers vorgewärmt wird, wobei die Heizvorrichtung der Dosiervorrichtung oder einer Düse der Dosiervorrichtung zum Auftragen des Primers in einem zeitlichen Abstand im Bereich von 0,1-10 s vorzugsweise simultan voreilt.

Hierbei hat es sich als besonders vorteilhaft erwiesen, eine Beschichtungseinheit bestehend aus Dosiervorrichtung und Heizvorrichtung einzusetzen. Unter einer Beschichtungseinheit kann dabei insbesondere eine Einheit verstanden werden, die eine feste Verbindung von Heizvorrichtung und Dosiervorrichtung vorsieht, so dass die Heizvorrichtung der Dosiervorrichtung in vorzugsweise einem definierten und konstanten Abstand bei der Relativbewegung voreilt, um sicherzustellen, dass die erste Fügezone unmittelbar vor dem Auftrag des Primers vorgewärmt wird. Selbstverständlich ist hierbei auch eine Einstellbarkeit des Abstandes oder bei konvektiver Vorwärmung das Einstellen des Volumenstroms bzw. Düsendurchmessers des Mediums, insbesondere durch geeignete mechanische, elektromechanische oder auch pneumatisch betriebene Stellmittel denkbar.

Andererseits kann unter der Beschichtungseinheit auch eine Heizvorrichtung und eine Dosiervorrichtung als zwei völlig voneinander getrennte oder separierte Baugruppen verstanden werden, die jedoch die gleiche oder im Wesentlichen die gleiche Relativbewegung hinsichtlich des Kunststoffes eingehen, um sicherzustellen, dass der Auftragsort des Primers unmittelbar vor dem Auftrag des Primers vorgewärmt wird.

In einer vorteilhaften Weiterbildung gehen Heizvorrichtung und Dosiervorrichtung eine zwar im Wesentlichen gleiche primäre Relativbewegung oder Grundrichtung hinsichtlich des Kunststoffes ein, jedoch erfährt zumindest eine von beiden genannten Vorrichtungen zusätzlich zur besagten primären Relativbewegung eine zusätzliche Relativbewegung hinsichtlich des Kunststoffes. So kann beispielsweise die Heizvorrichtung und/oder die Dosiervorrichtung neben der primären Relativbewegung, in der beispielsweise auch der Auftrag des Primers erfolgen kann, eine oder mehrere sekundäre Relativbewegungen eingehen. Beispielsweise kann insbesondere die Heizvorrichtung und/oder die Dosiervorrichtung eine um die primäre Relativbewegung kreisende oder mäanderförmige sekundäre Relativbewegung eingehen oder erfahren.

Dabei kann der Kunststoff auf der einen Seite oder die Heizvorrichtung und Dosiervorrichtung oder beide Vorrichtungen zusammen als Beschichtungseinheit auf der anderen Seite bewegt werden. Dabei ist es möglich, dass die Heizvorrichtung und Dosiervorrichtung oder beide Vorrichtungen zusammen als Beschichtungseinheit auf der einen Seite bzw. der Kunststoff auf der anderen Seite stillstehen oder jeweils mit dem sich bewegenden Teil in abweichende Richtung bewegt werden.

In einer vorteilhaften Weiterbildung erfolgt eine primäre Relativbewegung in einer Geschwindigkeit in einem Bereich von 10 mm/min bis 100 m/min, vorzugsweise im Bereich von 10 mm/min bis 30 m/min, so dass beispielsweise insbesondere auch durch geeignete Gestaltung der Heizvorrichtung möglichst kurze Verweilzeiten des Kunststoffes innerhalb der Heizfläche der Heizvorrichtung ergeben, insbesondere in einem Bereich von 1-60 s. Hierunter kann der Bereich bzw. der Raum um die Heizvorrichtung verstanden werden, der einen Einfluss auf die Temperatur im Sinne einer Temperaturerhöhung, also einer Vorwärmung der ersten Fügezone des ersten Kunststoffes hat. So kann beispielsweise eine zu große Aufheizung und eine Kunststoffschädigung oder Kunststoffbeeinträchtigung vermieden werden.

Zudem kann es sich als vorteilhaft erweisen, insbesondere zur Anbindung der Dosiervorrichtung und/oder der Heizvorrichtung an/in bestehende Fertigungslinien, die Heizvorrichtung mit einer Busschnittstelle auszustatten, insbesondere eines Profibus, oder einer Realtime-Ethernet-Schnittstelle.

Nach dem Aufbringen besagten Primers ist vorgesehen, die zweite Fügezone mit der Primerschicht in Kontakt zu bringen. Hierbei kann sich eine Fixierung beider Kunststoffe zueinander als zweckmäßig erweisen, insbesondere mittels dem Fachmann bekannter Spannvorrichtungen oder ähnlicher Hilfsmittel zur Fixierung.

Natürlich kann optional vor dem Schritt des In-Kontakt-Bringens der zweiten Fügezone mit der Primerschicht eine Vorbehandlung der zweiten Fügezone erfolgen. Dabei sind insbesondere alle oberhalb beschriebenen Techniken für eine Vorbehandlung denkbar. Denkbar ist auch eine Vorbehandlung des zweiten Kunststoffes oder der Fügezonen des zweiten Kunststoffes in einem größeren zeitlichen Abstand vor dem In-Kontakt-Bringen. So ist beispielsweise denkbar, die Vorbehandlung schon im Rahmen des Fertigungsprozesses des zweiten Kunststoffes vorzunehmen, um im erfindungsgemäßen Verfahren einen vorbehandelten Kunststoff weiterverarbeiten zu können. Die Vorbehandlung des zweiten Kunststoffes kann auch den Auftrag des Primers auf die zweite Fügezone beinhalten. Dabei ist vorzugsweise auch eine Vorwärmung der zweiten Fügezone vor dem Auftrag des Primers denkbar. Die obigen Ausführungen sind an dieser Stelle ebenfalls bevorzugt.

Es schließt sich an das oberhalb beschriebene In-Kontankt-bringen von zweiter Fügezone und Primer ein Fügeprozess an, in dem die behandelten und/oder beschichteten Fügepartner durch Wärmezufuhr plastifiziert und vorzugsweise unter Einwirkung von Druck miteinander stoffschlüssig verbunden werden. Denkbar ist für diese stoffschlüssige Verbindung der zweiten Fügezone mit dem Primer der Einsatz einer Wärmezufuhr mittels Wärmeleitung, beispielsweise mittels Heizelementschweissen und/oder Wärmekontaktschweißen und/oder Wärmeimpulsschweißen; durch Reibung, insbesondere Ultraschall-, Reib-/Vibrations- oder Hochfrequenzschweissen; Mikrowellen- oder Induktionsschweißen; durch Konvektion, wie beispielsweise Warmgas- oder Heissgasschweissen; mittels Strahlung, beispielsweise Infrarot-, Laserstumpf- oder Laserdurchstrahlschweissen oder auch durch Kombination zweier oder mehrerer dieser Techniken.

Ein weiterer Gegenstand dieser Erfindung sind gemäß dem erfindungsgemäßen Verfahren hergestellte Gegenstände bzw. Produkte.

Außerdem ist Gegenstand dieser Erfindung die Verwendung eines erfindungsgemäßen Primers zur Verschweißung von einem Polyamid-Kunststoff mit einem Poly(meth)acrylat-Kunststoff.

Ausführungsbeispiele

Eingesetzte Materialien und Abkürzungen:

PA = Polyamid
PA 6 = Polycaprolactam, Durethan BKV30
PA 6.6 = Poly-(N,N'-hexamethylenadipamid); Ultramid A3K
PMMA = Poly(methylmethacrylat)
PMMA 1 = Polycasa G87E
PMMA 2 = Plexiglas 8N
MAH = Maleinsäureanhydrid
Peroxid = Luperox A75 (75 Gew.-% Dibenzoylperoxid, 25 Gew.-% Wasser)
THF = Tetrahydorfuran
MIBK = Methylisobutylketon
CH = Cyclohexanon
Copolymer SM1 = Styrol-Maleinsäureanhydrid-Copolymer mit 15 Gew.-% MAH und Mw 170000 g/mol
Copolymer SM2 = Styrol-Maleinsäureanhydrid-Copolymer mit 8 Gew.-% MAH und Mw 250000 g/mol
Copolymer SM3 = Styrol-Maleinsäureanhydrid-Copolymer mit 26 Gew.-% MAH und Mw 180000 g/mol
Copolymer SM4 = Styrol-Maleinsäureanhydrid-Copolymer; Mw 180000 g/mol, partiell verestert mit Isobutyl/Methyl
IR: Infrarot-Schweißen; IR-VIB: Infrarot/Vibrations-Schweißen; US: Ultraschallschweißen

Herstellung der Styrol-Maleinsäureanhydrid-Methylmethacrylat-Copolymere SMA 5 und 6

| Copolymer | Mischungsverhältnis Styrol / Methylmethacrylat / Maleinsäureanhydrid [mol/mol/mol] | Styrol in g | Methylmethacrylat in g | Maleinsäureanhydrid in g | Peroxid in Gew.-% |
|---|---|---|---|---|---|
| SMA 5 | 1/1/1 | 6,25 | 6,01 | 5,93 | 0,1 |
| SMA 6 | 1/1/0,2 | 8,33 | 7,98 | 1,54 | 0,1 |

Durch radikalische Polymerisation in Substanz wurden Copolymere aus Styrol, Methylmethacrylat und Maleinsäureanhydrid gemäß der vorstehenden Tabelle synthetisiert. Sämtliche Edukte und der Initiator wurden in einen 1L 2-Halskolben eingewogen und im Ölbad unter starkem Rühren mittels Magnetrührer sehr langsam auf 95°C Ölbadtemperatur geheizt. Nachdem eine feste Masse entstanden war, wurde für 4 Stunden auf 140°C erhitzt. Das Reaktionsprodukt wurde in 100 mL THF gelöst und nach Abkühlen auf 20°C in 300 mL Methanol gefällt. Nach Filtration über einen Büchnertrichter wurden die entstandenen Copolymere im Vakuum vom Lösemittelrest befreit. Es wurden farblose Feststoffe erhalten.

Herstellung der Primer 1-10:

Zur Herstellung der Primer wurden die Polymerkomponenten durch mechanisches Rühren im Lösungsmittel gelöst und bei 25 °C entgast. Die Zusammensetzung der Primer ist aus der folgenden Tabelle in g zu entnehmen.

|  | Primer | | | | | | | | | |
|---|---|---|---|---|---|---|---|---|---|---|
|  | 1 | 2 | 3 | 4 | 5 | 6 | 7 | 8 | 9 | 10 |
| SM1 |  | 50 | 105,27 | 105,27 |  |  |  |  |  |  |
| SM2 |  |  |  |  | 105,27 |  |  |  |  |  |
| SM3 |  |  |  |  |  | 105,27 |  |  |  |  |
| SM4 |  |  |  |  |  |  | 17,5 | 17,5 |  |  |
| SMA5 |  |  |  |  |  |  |  |  | 10 |  |
| SMA6 |  |  |  |  |  |  |  |  |  | 10 |
| PMMA 1 | 50 |  | 90,04 |  |  |  |  |  |  |  |
| PMMA 2 |  |  |  | 90,04 | 90,04 | 90,04 | 15 | 15 |  |  |
| THF |  |  |  |  |  |  | 67,5 |  | 40 | 40 |
| MIBK | 93,36 | 93,36 | 364,69 | 364,69 | 364,69 | 364,69 |  |  |  |  |
| CH | 35,84 | 35,84 | 140 | 140 | 140 | 140 |  | 67,5 |  |  |

Herstellung der Primer 11 bis 13:

Durch Emulsionspolymerisation in Wasser wurden Copolymere aus Styrol, Methylmethacrylat und Maleinsäureanhydrid synthetisiert. Die jeweiligen Verhältnisse der Monomere zueinander können der nachfolgenden Tabelle entnommen werden.

| Primer | Mischungsverhältnis Styrol / Methylmethacrylat / Maleinsäureanhydrid [mol/mol/mol] | Styrol in g | Methylmethacrylat in g | Maleinsäureanhydrid in g |
|---|---|---|---|---|
| 11 | 1/2/1 | 24,5 | 47,0 | 23,0 |
| 12 | 1/1/0,2 | 42,9 | 42,9 | 8,6 |
| 13 | 1/1/0,1 | 14,6 | 14,0 | 1,4 |

Die Primer 11 und 12 wurden so hergestellt, dass eine Emulsion mit einem Wassergehalt von 52 Gew.-% und 0,5 Gew.-% des Tensid Disponil SDS G resultierten. Für dem Primer 13 wurde das Wasser entfernt und das resultierende Copolymer in 75 Gew.-% THF gelöst.

Es konnten Dispersion der Copolymere bzw. Primer hergestellt werden, die über mehrere Wochen bei Raumtemperatur keine Sedimentation aufwiesen.

Allgemeine Versuchsdurchführung:

Die Primer wurden bei Raumtemperatur auf die Oberfläche (130 mm x 3 mm) des zu verschweißenden PA-Kunststoffs aufgetragen (Abweichungen davon sind entsprechend in den folgenden Tabellen vermerkt). Danach wurde der Primer für 24 Stunden bei Raumtemperatur vom Lösemittel getrocknet. Nach dem Trocknen betrug die Dicke des Primer etwa 0,2 mm. Anschließend wurden die vorgetrockneten Kunststoffkomponenten mit einer Geometrie von 130 mm x 68 mm x 3 mm auf Stoß mit der 130 mm x 3 mm Oberfläche verschweißt. Die Zugfestigkeit wurde bei Raumtemperatur bei einer Zuggeschwindigkeit von 5 mm/s bestimmt. Die nachfolgenden Tabellen geben jeweils für die Kombination von Primer mit verwendeten Kunststoffen und Schweißverfahren an, welche Zugfestigkeit (in MPa) für die verschweißten Probekörper erhalten werden konnten:

IR und IR-VIB Schweißen:

| Primer | Polymerkombination (Schweißverfahren) | | | |
|---|---|---|---|---|
| | PA6+PMMA1 (IR) | PA6+PMMA1 (IR-VIB) | PA6+PMMA2 (IR) | PA6+PMMA2 (IR-VIB) |
| Ohne Primer | 0 | 0 | 0 | 0 |
| 1 (Vergleich) | 0 | 1,87 | 0 | 1,58 |
| 2 | | 6,01 | | 5,77 |
| 3 | 10,56 | 10,67 | 10,94 | 12,01 |
| 7 | | Auftrag auf PMMA; 13,57 | | |
| 9 | | | | 6,33 |
| 10 | | 12,43 | | 11,73 |
| 12 | | | | Auftrag auf beide Fügeteile; 5,69 |
| 13 | | | Auftrag auf beide Fügeteile; 15,51 | |

Ultraschallschweißen:

| Primer | Polymerkombination (Schweißverfahren) |
|---|---|
| | PA6+PMMA2 (US) |
| Ohne Primer | 1,15 |
| 4 | 8,4 |
| 5 | 9,5 |
| 6 | 9,7 |
| 7 | Auftrag auf PA; 6,11 |
| 8 | PA12+PMMA2 7,59 |
| 10 | 5,34 |
| 11 | 6,46 |
| 12 | 4,06 |
| 13 | 8,44 |

Die Ergebnisse zeigen, dass die mit einem Primer verschweißten Proben ausgezeichnete Zugfestigkeit aufweisen. Zudem ist festzustellen, dass die Primer mit einer Mischung aus Cyclohexanon und Methylisobutylketon als Lösungsmittel keine Bläschen nach dem Verdampfen des Lösemittels aufweisen. Allerdings nimmt die benötigte Zeit zum Verdampfen des Lösemittels mit Cyclohexanon zu.

Alterungstest von verschweißten Proben:

Für den Alterungstest wurde wie oben durchgeführt das PA-Kunststoffsubstrat mit dem Primer 7 beschichtet. Anschließend wurden die Kunststoffe PA 6.6 und PMMA 2 durch manuelles Heizelementschweißen mit einer Temperatur von etwa 280 °C mit einer Erwärmzeit von 15 Sekunden für das PMMA und 45 Sekunden für das PA 6.6 verbunden. Für den Alterungstest wurden die Proben dann bei einer Temperatur für eine gewisse Zeit gelagert und anschließend nach einer weiteren Lagerung bei Raumtemperatur für 24h der Zugfestigkeitstest bei Raumtemperatur durchgeführt. Die Ergebnisse sind wie folgt:

| Lagerbedingung | 24Std. 20°C | 24Std. 50°C | 24Std. 70°C | 8 Tage 50°C | 8 Tage 50°C und 80% rel. Luftfeuchtigkeit |
|---|---|---|---|---|---|
| Zugfestigkeit in MPa | 17,08 | 13,47 | 11,33 | 12,92 | 12,41 |

Die Ergebnisse zeigen eine ausgezeichnete Alterungsbeständigkeit der verschweißten Proben.

**Patentansprüche**

1. Verfahren zum Verschweißen von einem Polyamid-Kunststoff mit einem Poly(meth)acrylat-, insbesondere Polymethylmethacrylat-Kunststoff unter Verwendung eines Primers, wobei der Primer mindestens ein Copolymer synthetisiert aus mindestens einem Styrol oder Styrol-Derivat und mindestens einem Maleinsäureanhydrid oder Maleinsäureanhydrid-Derivat enthält.

2. Verfahren zum Verschweißen nach Anspruch 1, **dadurch gekennzeichnet, dass** der Polyamid-Kunststoff ausgewählt ist aus der Gruppe bestehend aus Polyamid 6, Polyamid 6.6, Polyamid 6.10, Polyamid 6.12, Polyamid 10.10, Polyamid 11, Polyamid 12, Polyamid 10.12, Polyphthalamiden, optisch transparenten Polyamiden oder Mischungen auf Basis dieser Polyamide.

3. Verfahren zum Verschweißen nach Anspruch 1 oder 2, **dadurch gekennzeichnet, dass** der Poly(meth)acrylat-Kunststoff aus 50 bis 100 Gew.-%, insbesondere 70 bis 100 Gew.-% Methylmethacrylat aufgebaut ist und/oder der Polymethylmethacrylat-Kunststoff Molmassen (Gewichtsmittel Mw) von größer 50000 g/mol aufweist und/oder der Poly(meth)acrylat-Kunststoff ein Polymethylmethacrylat-Kunststoff ist.

4. Verfahren zum Verschweißen nach einem der Ansprüche 1 bis 3, **dadurch gekennzeichnet, dass** das mindestens eine Copolymer ein molares Verhältnis von Styrol zu Maleinsäureanhydrid von 1:0,01 bis 1:2, bevorzugt 1:0,05 bis 1:1, besonders bevorzugt 1:0,1 bis 1:0,3 aufweist.

5. Verfahren zum Verschweißen nach einem der Ansprüche 1 bis 4, **dadurch gekennzeichnet, dass** das mindestens eine Copolymer auch weitere Monomere einpolymerisiert enthält, vorzugsweise ein Monomer ausgewählt aus der Gruppe von Acrylarten und Methacrylaten.

6. Verfahren zum Verschweißen nach einem der Ansprüche 1 bis 5, **dadurch gekennzeichnet, dass** das mindestens eine Copolymer einen Maleinsäureanhydrid-Gehalt von 0,1 - 50 Gew.-%, insbesondere 0,5 - 40 Gew.-%, bevorzugt 4 - 30 Gew.-%, besonders bevorzugt 8 - 26 Gew.-% bezogen auf das Copolymer aufweist.

7. Verfahren zum Verschweißen nach einem der Ansprüche 1 bis 6, **dadurch gekennzeichnet, dass** das mindestens eine Copolymer des Primers eine Glasübergangstemperatur Tg von größer 30 °C, insbesondere größer 80 °C, besonders bevorzugt größer 100 °C aufweist.

8. Verfahren zum Verschweißen nach einem der Ansprüche 1 bis 7, **dadurch gekennzeichnet, dass** das mindestens eine Copolymer ein gewichtsmittleres Molekulargewicht Mw im Bereich von 5000 - 2000000 g/mol, insbesondere von 50000 - 1000000 g/mol, bevorzugt von 100000 - 500000 g/mol aufweist.

9. Verfahren zum Verschweißen nach einem der Ansprüche 1 bis 8, **dadurch gekennzeichnet, dass** der Primer neben dem Copolymer mindestens ein weiteres Polymer enthält, welches zu mindestens einem der beiden zu verschweißenden Kunststoffe kompatibel ist, bevorzugt mindestens ein Polyamid-Polymer und/oder ein Poly(meth)acrylat-, insbesondere Polymethylmethacrylat-Polymer, bevorzugt ein Polymethylmethacrylat-Polymer.

**10.** Verfahren zum Verschweißen nach einem der Ansprüche 1 bis 9, **dadurch gekennzeichnet, dass** der Primer mindestens ein Lösungsmittel, insbesondere mindestens ein organisches Lösungsmittel enthält, wobei der Primer vorzugsweise einen Lösungsmittelgehalt von 10 - 90 Gew.-%, insbesondere 50 - 85 Gew.-%, besonders bevorzugt 60 - 80 Gew.-%, jeweils bezogen auf das Gesamtgewicht des Primers, aufweist.

**11.** Verfahren zum Verschweißen gemäß Anspruch 10, **dadurch gekennzeichnet, dass** das mindestens eine Lösungsmittel einen Dampfdruck bei 20 °C von 1 bis 600 hPa, insbesondere 2 bis 200 hPa, besonders bevorzugt 5 bis 20 hPa aufweist, vorzugsweise das Lösungsmittel ausgewählt ist aus der Gruppe aus Tetrahydrofuran, Mehylisobutylketon (MIBK), Cyclohexanon und Gemische daraus.

**12.** Gegenstand hergestellt nach einem Verfahren zum Verschweißen gemäß einem der Ansprüche 1-11.

**13.** Verwendung eines Primers, wie in einem der Ansprüche 1-11 charakterisiert, zur Verschweißung eines Polyamid-Kunststoffes mit einem Polymethylmethacrylat-Kunststoff.

**Claims**

**1.** A method for bonding a polyamide plastics material to a poly(meth)acrylate plastics material, in particular a polymethylmethacrylate plastics material, using a primer, wherein the primer contains at least one copolymer synthesized from at least one styrene or styrene derivative and at least one maleic anhydride or maleic anhydride derivative.

**2.** The method for bonding according to claim 1, **characterized in that** the polyamide plastics material is selected from the group consisting of polyamide 6, polyamide 6.6, polyamide 6.10, polyamide 6.12, polyamide 10.10, polyamide 11, polyamide 12, polyamide 10.12, polyphthalamides, optically transparent polyamides or mixtures based on said polyamides.

**3.** The method for bonding according to claim 1 or 2, **characterized in that** the poly(meth)acrylate plastics material is composed of from 50 to 100 wt.%, in particular 70 to 100 wt.%, methyl methacrylate and/or the polymethylmethacrylate plastics material has molar masses (weight average Mw) of more than 50,000 g/mol and/or the poly(meth)acrylate plastics material is a polymethylmethacrylate plastics material.

**4.** The method for bonding according to one of claims 1 to 3, **characterized in that** the at least one copolymer has a molar ratio of styrene to maleic anhydride of 1 : 0.01 to 1 : 2, preferably 1 : 0.05 to 1: 1, particularly preferably 1 : 0.1 to 1 : 0.3.

**5.** The method for bonding according to one of claims 1 to 4, **characterized in that** the at least one copolymer also contains further polymerized monomers, preferably a monomer selected from the group of acrylates and methacrylates.

**6.** The method for bonding according to one of claims 1 to 5, **characterized in that** the at least one copolymer has a maleic anhydride content of 0.1 to 50 wt.%, in particular 0.5 to 40 wt.%, preferably 4 to 30 wt.%, particularly preferably 8 to 26 wt.%, based on the copolymer.

**7.** The method for bonding according to one of claims 1 to 6, **characterized in that** the at least one copolymer of the primer has a glass transition temperature Tg of more than 30 °C, in particular more than 80 °C, particularly preferably more than 100 °C.

**8.** The method for bonding according to one of claims 1 to 7, **characterized in that** the at least one copolymer has a weight average molecular weight Mw in the range of from 5,000 to 2,000,000 g/mol, in particular from 50,000 to 1,000,000 g/mol, preferably from 100,000 to 500,000 g/mol.

**9.** The method for bonding according to one of claims 1 to 8, **characterized in that** in addition to the copolymer, the primer contains at least one further polymer which is compatible with at least one of the two plastics materials to be bonded, preferably at least one polyamide polymer and/or a poly(meth)acrylate polymer, in particular a polymethylmethacrylate polymer, preferably a polymethylmethacrylate polymer.

10. The method for bonding according to one of claims 1 to 9, **characterized in that** the primer contains at least one solvent, in particular at least one organic solvent, the primer preferably having a solvent content of 10 to 90 wt.%, in particular 50 to 85 wt.%, particularly preferably 60 to 80 wt.%, in each case based on the total weight of the primer.

11. The method for bonding according to claim 10, **characterized in that** the at least one solvent has a vapor pressure at 20 °C of from 1 to 600 hPa, in particular 2 to 200 hPa, particularly preferably 5 to 20 hPa; the solvent is preferably selected from the group of tetrahydrofuran, methyl isobutyl ketone (MIBK), cyclohexanone and mixtures thereof.

12. An object produced according to a method for bonding according to one of claims 1 to 11.

13. The use of a primer, as **characterized in** one of claims 1 to 11, for bonding a polyamide plastics material to a polymethylmethacrylate plastics material.

## Revendications

1. Procédé de soudage d'une matière plastique polyamide avec une matière plastique poly(méth)acrylate, en particulier poly(méth)acrylate de méthyle, à l'aide d'un apprêt, l'apprêt contenant au moins un copolymère synthétisé à partir d'au moins un styrène ou un dérivé du styrène et d'au moins un anhydride maléique ou d'un dérivé d'anhydride maléique.

2. Procédé de soudage selon la revendication 1, **caractérisé en ce que** la matière plastique polyamide est sélectionnée à dans le groupe comprenant du polyamide 6, du polyamide 6.6, du polyamide 6.10, du polyamide 6.12, du polyamide 10.10, du polyamide 11, du polyamide 12, du polyamide 10.12, des polyphtalamides, des polyamides optiquement transparents ou des mélanges basés sur ces polyamides.

3. Procédé de soudage selon la revendication 1 ou 2, **caractérisé en ce que** la matière plastique poly(méth)acrylate est constituée de 50 % à 100 % en poids de poly(méth)acrylate de méthyle, en particulier de 70 % à 100 % en poids de poly(méth)acrylate de méthyle et/ou la matière plastique poly(méth)acrylate de méthyle a une masse molaire (moyenne en poids Mw) supérieure à 50000 g/mol et/ou la matière plastique poly(méth)acrylate est une matière plastique poly(méth)acrylate de méthyle.

4. Procédé de soudage selon l'une des revendications 1 à 3, **caractérisé en ce que** l'au moins un copolymère a un rapport molaire du styrène à l'anhydride maléique allant de 1:0,01 à 1:2, de préférence de 1:0,05 à 1:1, et de façon particulièrement préférée de 1:0,1 à 1:0,3.

5. Procédé de soudage selon l'une des revendications 1 à 4, **caractérisé en ce que** l'au moins un copolymère contient également d'autres monomères, de préférence un monomère sélectionné dans le groupe comprenant des acrylates et des méthacrylates.

6. Procédé de soudage selon l'une des revendications 1 à 5, **caractérisé en ce que** l'au moins un copolymère a une teneur en anhydride maléique de 0,1 % à 50 % en poids, en particulier de 0,5 % à 40 % en poids, de préférence de 4 % à 30 % en poids, et de manière particulièrement préférée de 8 % à 26 % en poids par rapport au copolymère.

7. Procédé de soudage selon l'une des revendications 1 à 6, **caractérisé en ce que** l'au moins un copolymère de l'apprêt a une température de transition vitreuse Tg supérieure à 30 °C, en particulier supérieure à 80 °C, et de manière particulièrement préférée supérieure à 100 °C.

8. Procédé de soudage selon l'une des revendications 1 à 7, **caractérisé en ce que** l'au moins un copolymère a un poids moléculaire moyen en poids Mw dans une gamme allant de 5000 à 2000000 g/mol, en particulier de 50000 à 1000000 g/mol, de préférence de 100000 à 500000 g/mol.

9. Procédé de soudage selon l'une des revendications 1 à 8, **caractérisé en ce que** l'apprêt contient en plus du copolymère un copolymère supplémentaire qui est compatible avec au moins une des deux matières plastiques à souder, de préférence au moins un polymère de polyamide et/ou un polymère de poly(méth)acrylate, en particulier poly(méth)acrylate de méthyle, de préférence un polymère de poly(méth)acrylate de méthyle.

**10.** Procédé de soudage selon l'une des revendications 1 à 9, **caractérisé en ce que** l'apprêt contient au moins en solvant, en particulier au moins un solvant organique, l'apprêt ayant une teneur en solvant de 10 à 90 % en poids, en particulier de 50 à 85 % en poids, de manière particulièrement préférée de 60 à 80 % en poids par rapport au poids total de l'apprêt.

**11.** Procédé de soudage selon la revendication 10, **caractérisé en ce que** l'au moins un solvant a une pression de vapeur à 20 °C de 1 à 600 hPa, en particulier de 2 à 200 hPa, de manière particulièrement préférée de 5 à 20 hPa, le solvant étant de préférence sélectionné dans le groupe comprenant du tétrahydrofurane, de la méthylisobutylcétone (MIBK), de la cyclohexanone et des mélanges de ceux-ci.

**12.** Objet produit par un procédé de soudage selon l'une des revendications 1 à 11.

**13.** Utilisation d'un apprêt, tel que caractérisé dans une des revendications 1 à 11, pour souder une matière plastique polyamide à une matière plastique polyméthacrylate de méthyle.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005056286

**In der Beschreibung aufgeführte Nicht-Patentliteratur**

- **CHARLES M. HANSEN.** Hansen Solubility Parameters: A User's Handbook. Taylor & Francis Group, 2007

- HSPIP